# EUROPEAN PATENT APPLICATION

(11) **EP 1 569 021 A1**
(43) Date of publication of application: **31.08.2005**
(21) Application number: 05004059.1
(22) Date of filing: 24.02.2005
(51) Int. Cl.: G02B 6/50

(54) **Micro trench duct placement for optical fiber cables**

(30) Priority: 26.02.2004 US 786298
(71) Applicant: MCI, Inc., Virginia 20147 (US)
(72) Inventor: Purcell, Steven L., Richardson, Texas 75082 (US)
(74) Representative: Hofmann, Harald

(57) **Abstract**

A method of placing cable within concrete or asphalt includes cutting a trench into the concrete or asphalt. The method further includes placing a tubular material having a hollow inner diameter within the trench. The method also includes placing the cable within the tubular material.

## Description

The present invention relates generally to outside utility cable placement techniques and, more particularly, to utility cable placement using micro trench ducts.

With the explosion in communication via the Internet in recent years, there has been a corresponding increase in demand for high-speed bandwidth, such as that provided by fiber optic cables. However, provision of fiber optic cabling to the many locations, where it is in demand, has been problematic. Underground provision of fiber optic cabling has been a primary means of providing the cabling to various locations. Underground cable placement, though, requires excavation and, often, considerable surface destruction to permit the placement of the fiber optic cabling. Additionally, when the cable is placed in the ground, it is difficult to repair without having to re-excavate the area so that the cable can be removed. Furthermore, placement of cable directly in the ground leaves the cable in an unprotected state where it is susceptible to injury due to environmental conditions or external events on, or under, the surface of the ground.

Therefore, there exists a need for methods and assemblies for installing subsurface utility cables, such as fiber optic cables, that reduce surface destruction when installing the cables, improves the capability to repair subsurface cables once they are installed, and protects subsurface utility cables so as to reduce damage due to environmental conditions or external events.

In accordance with one aspect consistent with the principles of the invention, a method of placing cable beneath a roadway includes cutting a trench in a surface of the roadway and placing a duct in the trench. The method further includes filling the trench with a sealer and placing cable within the duct.

According to another aspect consistent with the principles of the invention, an assembly for carrying cable within a trench cut in concrete or asphalt includes a duct comprising a tubular material having a hollow inner diameter and an outer diameter that is approximately equal to a width of the trench. The assembly further includes cable placed within the hollow inner diameter of the duct.

According to yet another aspect consistent with the principles of the invention, a method of placing cable within concrete or asphalt includes cutting a trench into the concrete or asphalt to a depth of 3.5 to 4.0 inches from a surface of the concrete or asphalt. The method further includes placing a tubular material having a hollow inner diameter within the trench and placing the cable within the tubular material.

The accompanying drawings, which are incorporated in and constitute a part of this specification, illustrate exemplary embodiments of the invention and, together with the description, explain the invention. In the drawings,
FIG. 1 illustrates a micro trench according to one aspect of the invention;
FIG. 2 is a flow chart that illustrates an exemplary process consistent with an aspect of the invention;
FIG. 3 illustrates an exemplary cutting of a ninety degree turn according to an aspect of the invention;
FIG. 4 illustrates an exemplary core bore according to an aspect of the invention;
FIG. 5 illustrates an exemplary micro trench entrance to a hand hole according to an aspect of the invention;
FIG. 6 illustrates an exemplary micro trench entrance to a manhole according to an aspect of the invention;
FIGS. 7A and 7B illustrate an exemplary micro trench entrance through a wall according to an aspect of the invention;
FIG. 8 illustrates an exemplary micro duct placement process according to an aspect of the invention;
FIG. 9 illustrates an exemplary process for placing a micro trench spacer according to an aspect of the invention;
FIGS. 10A and 10B illustrate spacer and sand placement in the micro trench ninety-degree turn of FIG. 3 according to an aspect of the invention; and
FIG. 11 illustrates an exemplary process for placing a micro trench sealer according to an aspect of the invention.

The following detailed description of the invention refers to the accompanying drawings. The same reference numbers in different drawings may identify the same or similar elements. Also, the following detailed description does not limit the invention. Instead, the scope of the invention is defined by the appended claims and their equivalents.

Methods and assemblies consistent with the present invention enable the placement of subsurface utility cables through the use of subsurface micro trenches and micro ducts, installed in roadway concrete or asphalt, that require minimal surface trenching, permit easy repair of the utility cables, and protect the utility cables from environmental conditions or external events. Consistent with one aspect of the invention, micro trenches may be cut approximately three to four inches into a roadway surface, and a micro duct that includes a high load rating material may be placed into the micro trench for carrying the subsurface utility cables. A spacer may be placed on top of the micro duct along the length of the micro trench to enhance structural rigidity and to protect the micro duct. A sealer may then be placed in the micro trench, over the micro duct and spacer, to fill up the trench made in the roadway surface.

Subsurface utility cables may then be inserted in the micro duct subsequent to placement of the micro duct in the micro trench. Subsurface utility cables may, thus, be easily repaired after placement into the micro trench by pulling the cables out through the micro duct via, for example, a hand hole or a manhole. The micro duct and spacer may additionally protect the subsurface utility cables from environmental conditions and external events that may otherwise damage the utility cables.

### EXEMPLARY MICRO TRENCH

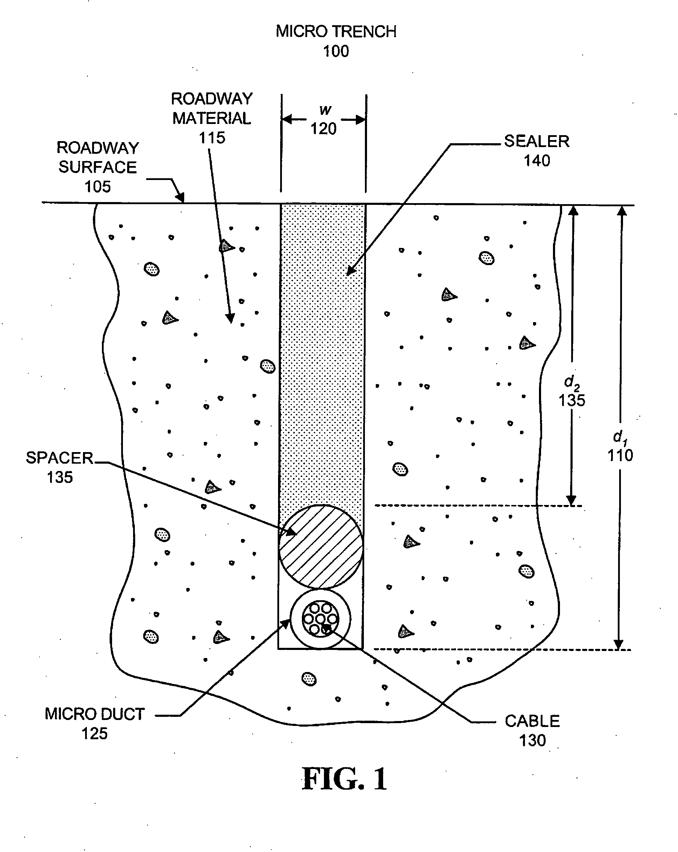

FIG. 1 illustrates a cross section of an exemplary micro trench 100 that may be constructed in accordance with exemplary processes consistent with the invention. Micro trench 100 may include a channel in a roadway surface 105 for receiving a micro duct 125. For example, micro trench 100 may be cut through roadway surface 105 to a depth of *d*_{*1*} 110 in roadway material 115. Depth *d*_{*1*} 110 may range from about 3.5 to about 4.0 inches. In one exemplary implementation, *d*_{*1*} may be 4.0 inches. Additionally, micro trench 100 may be cut to a width *w* 120 through roadway surface 105. Width *w* 120 may range from about 0.50 inches to about 0.55 inches. In one exemplary implementation, *w* 120 may be 0.5 inches. Roadway material 115 may include concrete or asphalt.

After the cutting of micro trench 100, a micro duct 125 may be placed in the bottom of micro trench 100. Micro duct 125 may include a hollow tubular conduit for receiving cable 130, such as, for example, any type of utility cable. In one implementation, for example, micro duct 125 may be made of HDPE and may further be HD20 load rated. Micro duct 125 may include an inside diameter that ranges from about 0.35 inches to about 0.40 inches. Micro duct 125 may further include an outside diameter that ranges from about 0.475 inches to about 0.525 inches. In one exemplary implementation, micro duct 125 may include a 0.375 inch inside diameter and a 0.5 inch outside diameter. Cable 130, such as, for example, fiber optic cable, may be installed in micro duct 125 to run through the inside diameter of the duct. Cable 130 may also include any tyne of utility cable that may fit within the inner diameter of micro duct 125.

After placement of micro duct 125, a spacer 135 may be placed in micro trench 100. Spacer 135 may include a substantially solid tubular member that enhances structural rigidity and provides protection to cable 130 from, for example, moisture and other environmental conditions that exist on the roadway surface 105. Spacer 135 may, for example, be made out of a material that is water impermeable and heat resistant to approximately 400 degrees Fahrenheit. In some implementations, for example, spacer 135 may be placed on top of micro duct 125 at a depth *d*_{*2*} 135 below roadway surface 105. Depth *d*_{*2*} 135 may be at least 2 inches, but not more than 3 inches. Spacer 135 may have a diameter that is approximately 25% larger than trench width *w* 120 to ensure a tight seal between micro duct 125 and side surfaces of micro trench 100. In one exemplary implementation, spacer 135 may have a 5/8 inch diameter for a ½ inch trench.

After placement of spacer 135, a sealer 140 may be placed in micro trench 100. Sealer 140 may seal micro trench 100 to protect cable 130 from environmental conditions. Sealer 140 may include, for example, bitumen, though other sealing materials may be used. The thickness of sealer 140 may be between two and three inches, and should overlap the edge of micro trench 100 by about two inches (not shown). The total width of sealer 140 on the roadway surface 105, therefore, should be approximately 4.5 inches (assuming a trench width *w* 120 of 0.5 inches). Sealer 140 may protrude no more than ¼ inch above the roadway surface 105.

### EXEMPLARY TRENCH CUTTING PROCESS

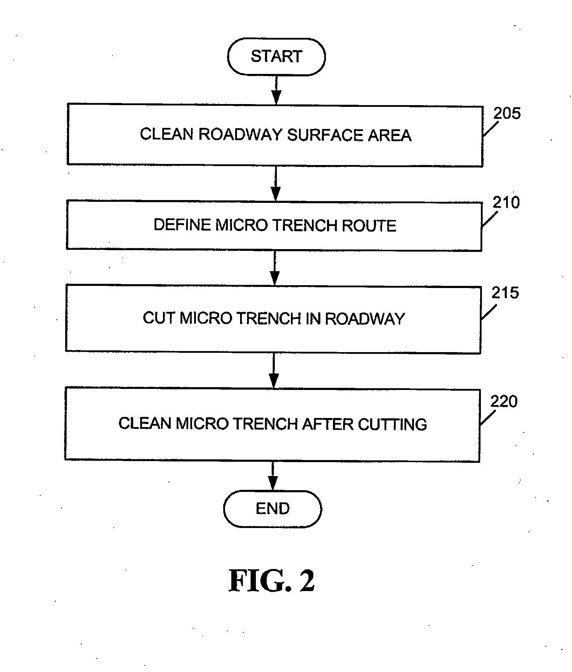

FIG. 2 is a flowchart that illustrates an exemplary process, consistent with the present invention, for cutting a micro trench 100. The exemplary process may begin with cleaning of the roadway surface 105 where the trench is to be cut [act 205]. The roadway surface 105 may be cleaned, for example, with high-pressure water or air to remove debris from the roadway. A route for micro trench 100 may then be defined on the roadway surface 105 [act 210]. Defining micro trench 100 may include, for example, marking the route for micro trench 100 with any appropriate marking technique or mechanism. Such techniques or mechanisms may include, for example, marking the route for micro trench 100 with a chalk line. Such techniques or mechanisms may further include, for example, using lasers, GPS, inertial navigation systems, etc. for locating and marking the route for micro trench 100.

A micro trench 100 may then be cut in the roadway material 115 along the defined trench route [act 215]. For example, standard ½ inch concrete saw blades, turned so that the blade cuts backwards (i.e., upcuts), may be used to cut a micro trench 100 of width *w* 120 and depth *d*_{*1*} 110. The cutting machine may be used without water (i.e., dry cut), with a dust collection and containment system attached to the back of the blade area to catch the debris and dust.

When possible, micro trench 100 may be cut parallel or perpendicular to other pavement attributes (e.g., expansion joints, striping, etc.). The trench depth *d*_{*1*} may be between 3.5 and 4 inches and should be inspected after cutting to ensure gradual transitions are maintained.

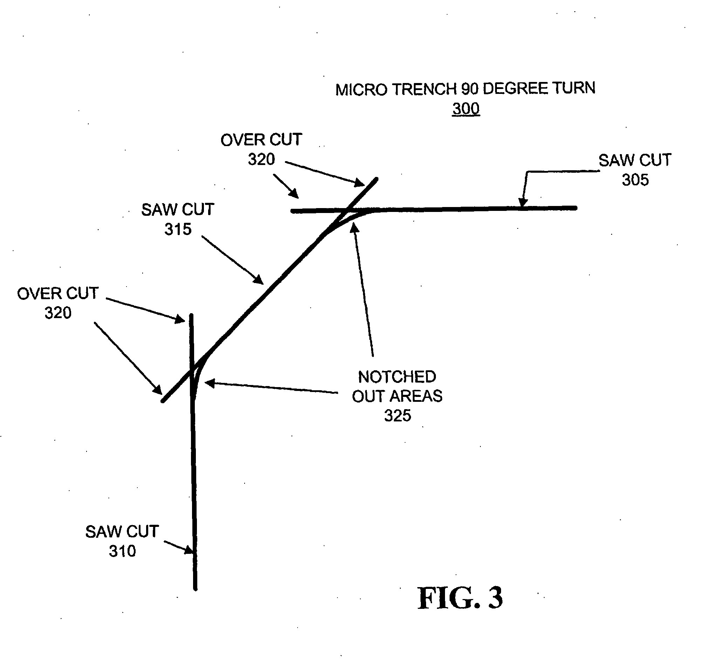

Transitions in depth at the bottom of micro trench 100 should be smooth and may be achieved with a hand/cut-off saw. Trench width *w* 120 may be equal to the outer diameter of the micro duct 125 that is to be placed in micro trench 100. For example, if micro duct 125 to be placed has an outside diameter of 0.5 inches, then width *w* 120 should be 0.5 inches.
If ninety degree turns in micro trench 100 are required, then trench 100 may be cut to each running line, and then a forty-five degree angle may be cut between the two lines. For example, a micro trench ninety-degree turn 300 is illustrated in FIG. 3. To make the ninety degree turn, a first saw cut 305 is made along the trench running line and a second saw cut 310 is made perpendicular to the first saw cut 305. A forty-five degree saw cut 315 may then be made that over cuts each end of the first and second saw cuts 305 and 310. At the intersection of the forty-five degree saw cut 315 and the first and second saw cuts 305 and 310, areas 325 may be notched out to an approximate six-inch radius. The forty-five degree saw cut 315 may extend approximately one saw blade in length between the first and second saw cuts 305 and 310.

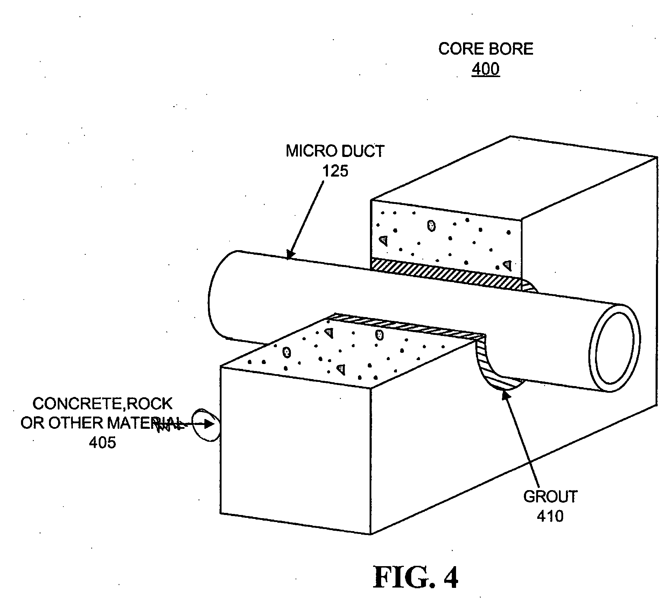

For entering hand holes, manholes, or building walls, a core bore may be made through an external surface of the hand hole, manhole or building wall. For example, as shown in FIG. 4, a core bore 400 may be drilled through the concrete, rock or other material 405 that comprises the hand hole, manhole or building wall. In some implementations, for example, core bore 400 may include an outer diameter of one inch.

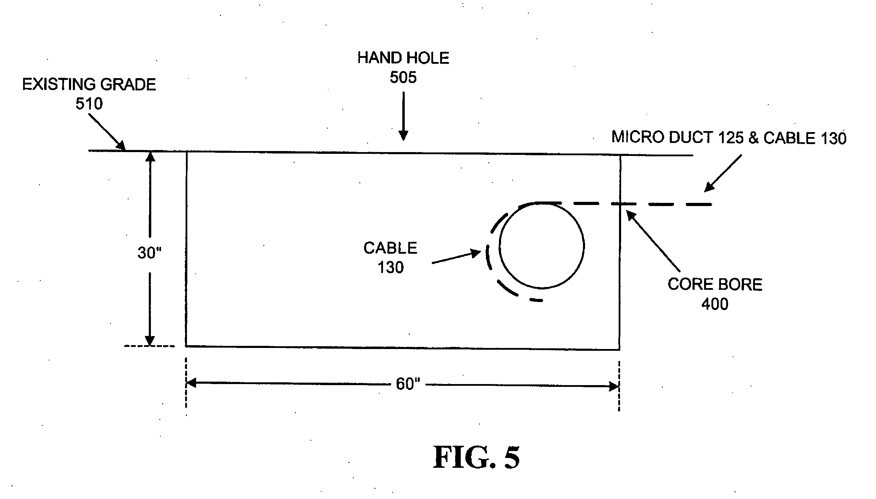

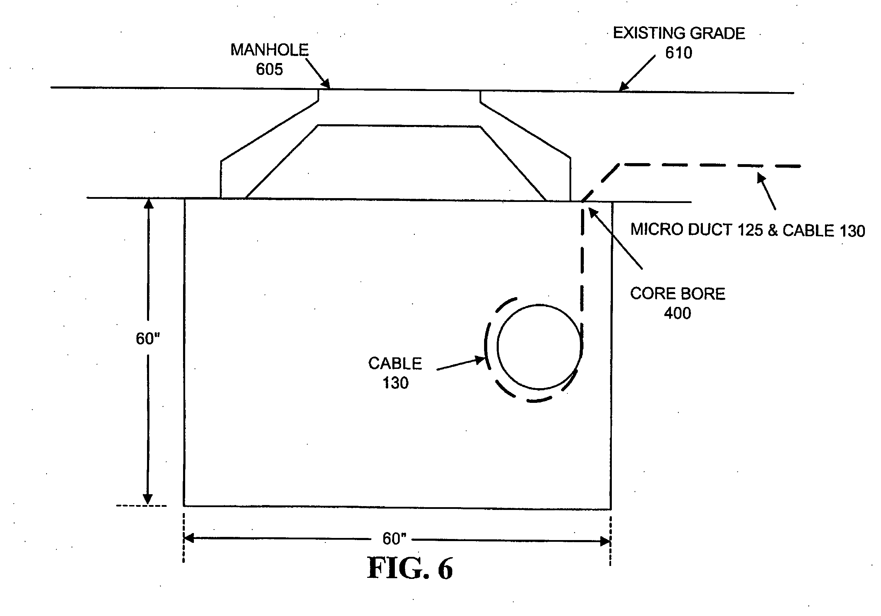

FIG. 5 illustrates a specific example of a core bore 400 entrance to a hand hole 505 through a side surface of hand hole 505 below an existing grade 510. Micro duct 125 and cable 130 may run through core bore 400 entrance into hand hole 505. FIG. 6 illustrates another specific example of a core bore 400 entrance to a manhole 605 through a surface of the manhole 605 below an existing grade 610. Micro duct 125 and cable 130 may run into core bore 400 entrance into manhole 605.

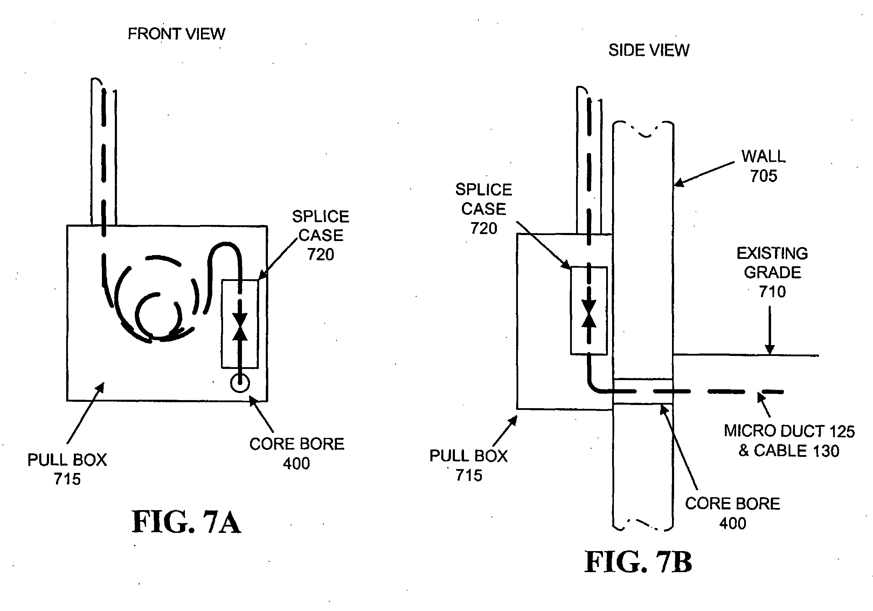

FIGS. 7A and 7B illustrate another specific example of a core bore 400 entrance through a wall 705 below an existing grade 710. Micro duct 125 and cable 130 may be run through core bore 400 entrance through wall 705 into, for example, the interior of a building.
Returning to FIG. 2, subsequent to cutting of micro trench 100, the trench may be cleaned [act 220]. Micro trench 100 may be cleaned, for example, with a blower or compressed air to remove all dust and debris.

### EXEMPLARY MICRO DUCT PLACEMENT PROCESS

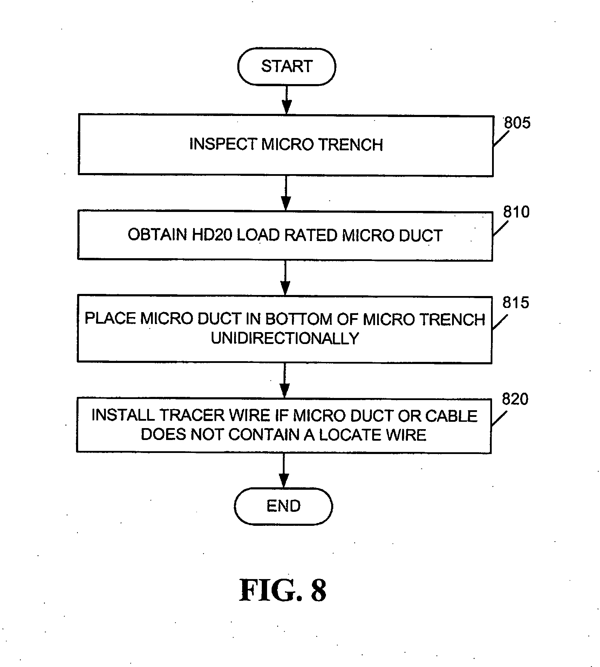

FIG. 8 is a flowchart that illustrates an exemplary process, consistent with the present invention, for placing micro duct 125 in micro trench 100. The exemplary micro duct placement process may begin with an inspection of micro trench 100 [act 805]. Micro trench 100 may be inspected, for example, to ensure that the trench is free of debris. Dirt, debris and surface moisture should be removed from at least six inches on each side of micro trench 100 prior to placement of micro duct 100. HD20 load rated micro duct 125 may be obtained [act 810] and inspected to ensure that it is the appropriate inside and outside diameter. Micro duct 125 may then be placed in the bottom of micro trench 100 uni-directionally (i.e., placed only in one direction along the trench) [act 815]. Micro duct 125 usually should not be placed from two different directions (i.e., bi-directionally). Micro duct 125 may be placed at the bottom of micro trench 100 by pressing it into the trench using a steel wheel with sufficient weight to ensure that slack is removed and there is no space between the duct and the bottom of trench 100. If the micro duct 125 that is used does not contain a locate wire, then a tracer wire may be installed for locate purposes [act 820]. The tracer wire may, for example, include a coated 14 gauge copper wire installed on top of micro duct 125 and under spacer 135.

For entering hand holes, manholes, or building walls, micro duct 125 may be inserted through a core bore 400 that extends through an external surface of the hand hole, manhole or building wall. For example, as shown in FIG. 4, micro duct 125 may be inserted through a core bore 400 that extends through concrete, rock or other material 405 of the hand hole, manhole, or building wall. Grout 410, such as, for example, epoxy grout, may be used between micro duct 125 and core bore 400 to seal any gap that exists between core bore 400 and micro duct 125.

FIG. 5 illustrates a specific example of micro duct 125 inserted through a core bore 400 that extends through an external surface of a hand hole 505. FIG. 6 illustrates another specific example of micro duct 125 inserted through a core bore 400 that extends through an external surface of a manhole 605. FIGS. 7A and 7B further illustrate another example of micro duct 125 inserted through a core bore 400 that extends through a wall 705, such as a building wall. The cable 130 within micro duct 125 may be inserted into a splice case 720 of a pull box 715.

### EXEMPLARY SPACER PLACMENT PROCESS

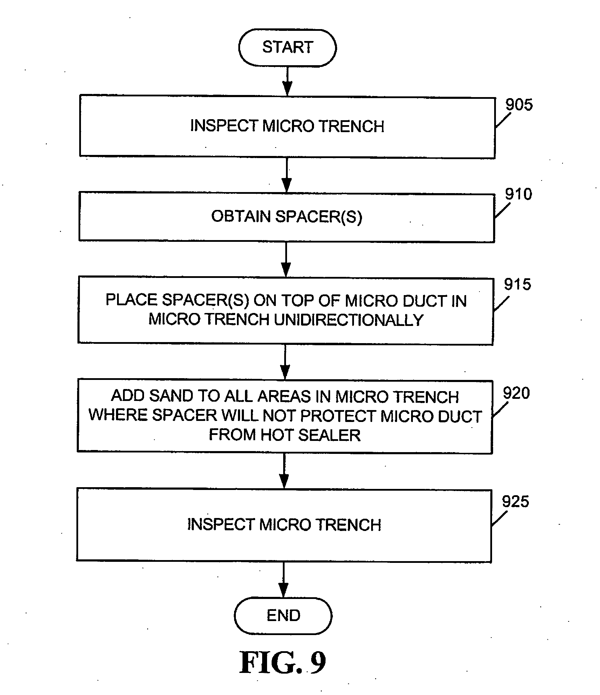

FIG. 9 is a flowchart that illustrates an exemplary process, consistent with the present invention, for placing one or more spacers in micro trench 100. The exemplary process may begin with the inspection of micro trench 100 [act 905]. Micro trench 100 may be inspected, for example, to ensure that the trench is free of debris. An appropriate sized spacer 135 may then be obtained for placing in micro trench 100 [act 910]. The diameter of spacer 135 may be 25% larger than the width w 120 of micro trench 100 to ensure a tight seal between micro duct 125 and sealer 140.

Spacer 135 may be placed on top of micro duct 125 uni-directionally (i.e., only in one direction in trench 100) [act 915]. Spacer 135 usually should not be placed from two different directions (i.e., bi-directionally) and normally should not be spliced to begin a new piece or to make a repair. Instead of splicing, adjacent spacers 135 may be overlaid by at least six inches. Spacer 135 may be placed on top of micro duct 125 by pressing spacer 135 into micro trench 100 using a steel wheel with sufficient weight to ensure that slack is removed and that there is no space between micro duct 125 and the bottom of spacer 135.
Once all spacers 135 in the trench line are in place, sand may be added to all areas in micro trench 100 where spacers 135 will not protect micro duct 125 from hot sealer 140 [act 920]. The sand should be added such that its height is the same as the top of spacer 135. The sand may be fine grade and dry. After installation, the micro trench 100 may be inspected [act 925]. Micro trench 100 may be inspected, for example, to ensure that the top of spacer 135 or sand, if any, is at depth *d*_{*2*} below the roadway surface 105. Depth *d*_{*2*} may by at least 2 inches, but no more than 3 inches from the surface.

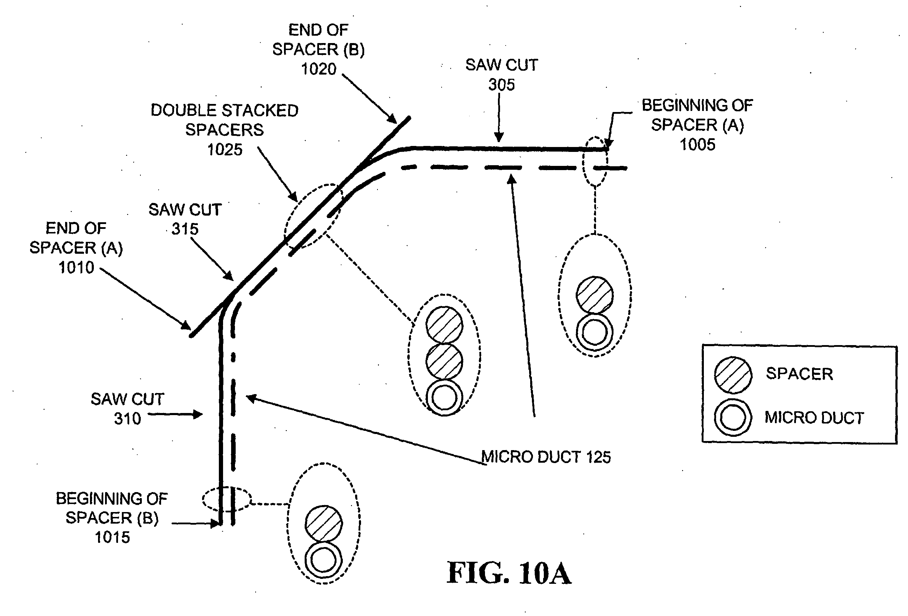

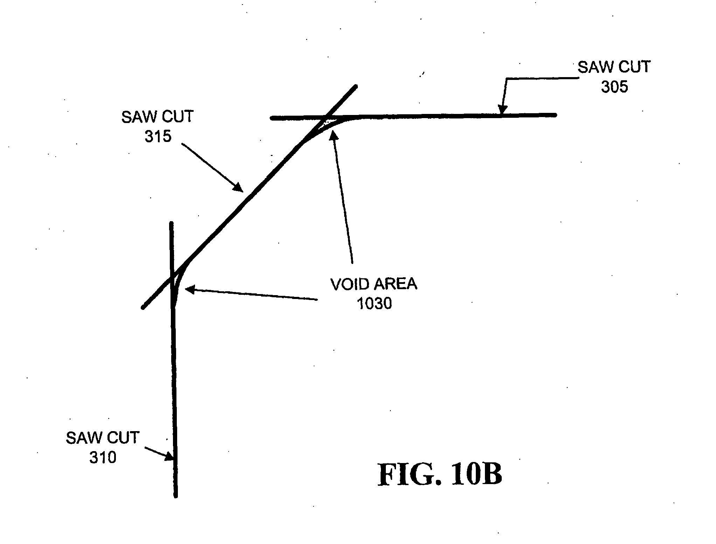

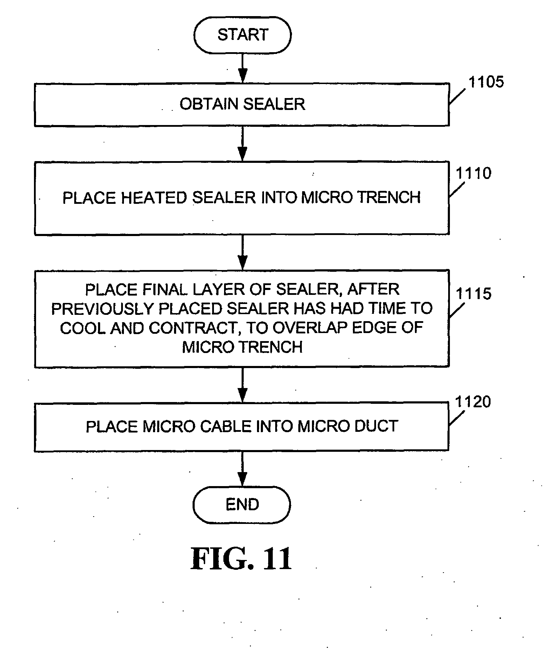

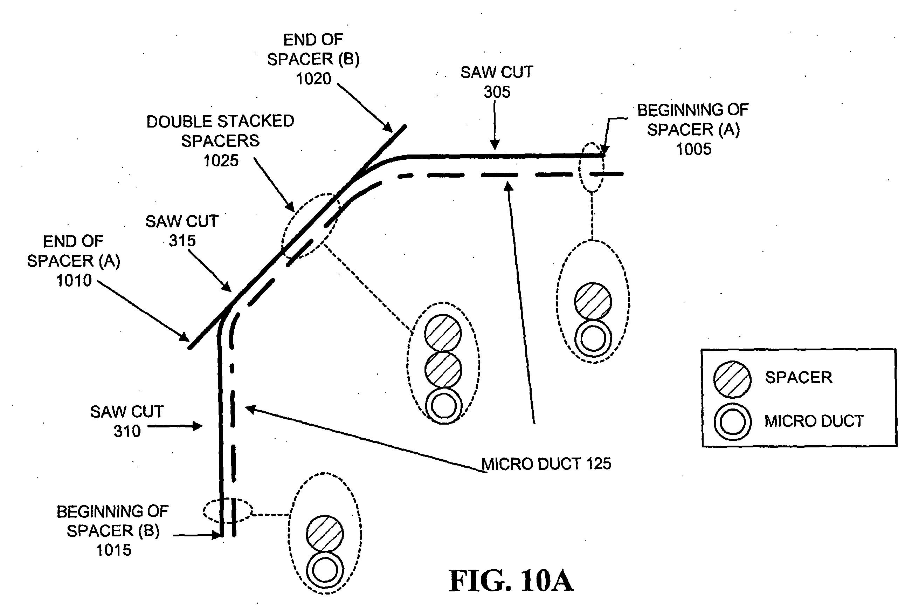

FIGS. 10A and 10B illustrate the placement of spacers 135 within a micro trench undergoing a ninety-degree turn, as previously shown in FIG. 3. A beginning 1005 of a first spacer A may be placed on top of micro duct 125, within saw cut 305, and further placed such that the end 1010 of the spacer A ends at one end of the forty-five degree saw cut 315. A beginning 1015 of a second spacer B may be placed on top of micro duct 125, within saw cut 310, and further placed such that the end 1020 of the spacer B ends at another end of forty-five degree saw cut 315. Spacers A and B may, thus, be double stacked 1025 over a portion of forty-five degree saw cut 315. Subsequent to placement of spacers A and B, the void area 1030 (FIG. 10B) at the intersection of saw cut 305 and saw cut 315, and the intersection of saw cut 310 and saw cut 315, may be filled to the top level of the spacers with sand.

### EXEMPLARY SEALER AND CABLE PLACMENT PROCESS

FIG. 11 is a flowchart that illustrates an exemplary process, consistent with the present invention, for placing sealer in micro trench 100 subsequent to micro duct placement. The exemplary process may begin with obtaining sealer 140 that is to be placed in micro trench 100 [act 1105]. Sealer 140 may include, for example, bitumen, though other sealing materials may be used. Seated 140 may be heated and then placed in micro trench 100 [act 1110]. Heated sealer 140 may, for example, be placed in micro trench 100 over spacer 135 in multiple unidirectional passes. Heated sealer 140 may include, for example, a thickness of *d*₂. In some implementations, thickness *d*_{*2*} may range from about 2 inches to about 3 inches.
If the trench requires more than 3 inches of sealer, then a spacer or sand may be used to fill the additional void between the top of spacer 135 that is placed on top of micro duct 125. Sealer 140 may be heated to a temperature of between 325 degrees Fahrenheit (F) to about 375 degrees F before placement in micro trench 100. The final pass to place sealer 140 may be made after previously placed sealer has had time to cool and contract [act 1115] and may overlap the edge of micro trench 100 by approximately two inches. Sealer 140 may be placed to include no more than ¼ inch of sealer above roadway surface 105.

After placement of sealer 140, the cable 130 may be placed in micro duct 125 [act 1120]. A pulling method, for example, may be used to pull cable 130 through micro duct 125. Pulling tension, however, usually should not exceed 300 lbs., therefore, a 300 lb. break-away may be used. Cable blowing techniques may also be used to place cable in micro duct 125.

### CONCLUSION

Consistent with the invention, a technique may be employed that uses micro ducts that can be placed in micro trenches under roadway concrete or asphalt to carry subsurface utility cables. Micro trenches may be cut approximately three to four inches into the roadway surface and a micro duct that includes a high load rating material may be placed into the micro trench for carrying the subsurface utility cables. Subsurface utility cables may be inserted in the micro duct and may then be easily repaired by pulling the cables out through the micro duct via, for example, a hand hole or a manhole. The micro duct additionally protects the subsurface utility cables from environmental conditions and external events that may otherwise damage the utility cables. Methods and assemblies, consistent with the invention, thus, permit the installation of subsurface utility cables that require minimal trenching, permit easy repair of the utility cables, and protect the utility cables from environmental conditions or external events.

The foregoing description of embodiments of the present invention provides illustration and description, but is not intended to be exhaustive or to limit the invention to the precise form disclosed. Modifications and variations are possible in light of the above teachings or may be acquired from practice of the invention. While series of acts have been described with respect to FIGS. 2, 8, 9 and 11, the order of the acts may vary in other implementations consistent with the present invention. Also, non-dependent acts may be performed in parallel.

No element, act, or instruction used in the description of the present application should be construed as critical or essential to the invention unless explicitly described as such. Also, as used herein, the article "a" is intended to include one or more items. Where only one item is intended, the term "one" or similar language is used. The scope of the invention is defined by the following claims and their equivalents.

## Claims

1. A method of placing cable beneath a roadway, comprising:
cutting a trench in a surface of the roadway;
placing a duct in the trench;
filling the trench with a sealer; and
placing cable within the duct.

2. The method of claim 1, wherein the cable comprises utility cable.

3. The method of claim 1, wherein the cable comprises optical fiber cable.

4. The method of claim 1, wherein the trench is cut to a depth of approximately 3.5 to 4.0 inches beneath the surface of the roadway.

5. The method of claim 1, wherein the duct comprises HD20 load rated duct.

6. The method of claim 1, wherein the duct comprises HDPE duct.

7. The method of claim 4, wherein the trench is cut to a width of approximately 0.5 inches.

8. The method of claim 1, further comprising:
placing a spacer within the trench on top of the duct.

9. The method of claim 8, wherein the spacer comprises a tubular shape.

10. The method of claim 9, wherein a diameter of the spacer is approximately 25% larger than a width of the trench.

11. The method of claim 1, further comprising:
placing sand within the trench.

12. The method of claim 1, wherein the sealer comprises bitumen.

13. The method of claim 12,wherein the sealer is heated to between approximately 325 and 375 degrees Fahrenheit before filling the trench.

14. An assembly for carrying cable within a trench cut in concrete or asphalt, comprising:
a duct comprising a tubular material having a hollow inner diameter and an outer diameter that is approximately equal to a width of the trench; and
cable placed within the hollow inner diameter of the duct.

15. The assembly of claim 14, further comprising:
a tubular spacer placed adjacent the duct within the trench.

16. The assembly of claim 14, further comprising:
sealer placed over the duct within the trench to fill at least a portion of the trench not occupied by the duct.

17. The assembly of claim 14, wherein the tubular material comprises HD20 load rated material.

18. The assembly of claim 14, wherein the tubular material comprises HDPE.

19. The assembly of claim 14, wherein the tubular material comprises an outer diameter of approximately 0.5 inches and an inner diameter of approximately 0.375 inches.

20. The assembly of claim 16, wherein the sealer comprises bitumen.

21. The assembly of claim 15, wherein the spacer is water impermeable and heat resistant to approximately 400 degrees Fahrenheit.

22. The assembly of claim 15, wherein the spacer has an outer diameter that is approximately 25% larger than the width of the trench.

23. A method of placing cable within concrete or asphalt, comprising:
cutting a trench into the concrete or asphalt to a depth of approximately 3.5 to 4.0 inches from a surface of the concrete or asphalt;
placing a tubular material having a hollow inner diameter within the trench; and
placing the cable within the tubular material.

24. The method of claim 23, wherein the cable comprises fiber optic cable.

25. The method of claim 24, further comprising:
placing a spacer on top of the tubular material, wherein the spacer comprises a water impermeable, heat resistant material.

26. The method of claim 25, wherein the spacer has an outer diameter that is approximately 25% greater than a width of the trench.

27. The method of claim 23, wherein the tubular material comprises HD20 load rated material.

28. The method of claim 23, wherein the tubular material comprises HDPE.

29. The method of claim 23, wherein the tubular material comprises an outer diameter of approximately 0.5 inches and wherein the inner diameter comprises approximately 0.375 inches.

30. The method of claim 23, further comprising:
filling at least a portion of the trench with a sealer.

31. The method of claim 30, wherein the sealer comprises bitumen heated to between 325 and 375 degrees Fahrenheit.
